# EUROPEAN PATENT APPLICATION

(11) **EP 2 865 277 A1**
(43) Date of publication of application: **29.04.2015**
(21) Application number: 14193836.5
(22) Date of filing: 19.11.2014
(51) Int. Cl.: A23L 1/237, A23L 1/40, A21D 13/08

(54) **Food product for low sodium intake**

(30) Priority: 19.11.2013 EP 13193530
(71) Applicant: Solvay SA, 1120 Bruxelles (BE)
(72) Inventor: Patat, Olivier, 75017 Paris (FR); Fedi, Andrea, 57127 Livorno (IT); Gonnissen, Isabelle, BE-1120 Bruxelles (BE)
(74) Representative: Teipel, Stephan

(57) **Abstract**

Food product comprising at least 0.005% by weight of sodium chloride and calcium chloride, expressed as total concentration of both sodium chloride and calcium chloride, characterized in that weight ratio of calcium chloride to sodium chloride is at most 0.30 and at least 0.05.

## Description

This application claims priority to European application No. 13193530.6 - filed 19 Nov 2013, the whole content of this application being incorporated herein by reference for all purposes.

### Technical Field

The invention relates to a food product for law sodium intake comprising sodium chloride and calcium chloride characterized in specific weight ratio of calcium chloride to sodium chloride.

### Prior art

Sodium content in food is a major issue due to health impacts. Food sector is trying to achieve a reduction of Sodium Chloride (NaCl) by 30% in short term. Today the main alternatives to NaCl are KCl and MgCl₂.

Sodium intake is vital, though an excess of sodium intake is detrimental to health. Salty taste and flavor is an important attribute for food products. Several soluble salts are known to be substitutable to sodium salts.

KCl intake is known to bring health risk as potassium is an issue for kidney disease.

All known alternatives bring metallic taste and bitterness in particular MgCl2.

### Summary of the invention

Excellent surprise was experienced by present inventors discovering that the taste of CaCl₂ in association with sodium chloride NaCl in a specific range brings a good profile of saltiness without impairing sensory profile: smell, flavor and mouth-feel characteristics, and also without impairing health. This enables to reduce the amount of sodium chloride added to a food product.

Therefore, the invention relates to a food product comprising at least 0.005% by weight of sodium chloride and calcium chloride, expressed as total concentration of both sodium chloride and calcium chloride, characterized in that weight ratio of calcium chloride to sodium chloride is at most 0.30 and at least 0.05.

In particular the food product of present invention is in liquid or in solid form. When in liquid form it can be also in a creamy form.

The invention relates also to the use of calcium chloride in food products according the present invention.

### Definitions

For purposes of the present description, certain terms are intended to have the following meanings.

The expression 'for low sodium intake' refers to the aim of decreasing the sodium content of a food product, in particular in substituting part of sodium chloride addition by calcium chloride addition.

The term 'comprising' includes 'consisting essentially of" and also "consisting of'.

In addition, if the term "about" is used before a quantitative value, the present teachings also include the specific quantitative value itself, unless specifically stated otherwise. As used herein, the term "about" refers to a +-10% variation from the nominal value unless specifically stated otherwise.

The sign '%' refers to 'weight %' unless specifically stated otherwise.

### Detailed description of the invention

The inventors of present invention have surprisingly observed that the addition of calcium chloride to a weight ratio of more than 0.05 and less than 0.30 reported to sodium chloride weight, enable an optimum replacement of part of sodium chloride in food products, conserving a salty taste and preserving the food sensory profile of the corresponding food.

Consequently the present invention relates to a food product comprising at least 0.005% by weight of sodium chloride and calcium chloride, expressed as total concentration of both sodium chloride and calcium chloride, characterized in that weight ratio of calcium chloride to sodium chloride is at most 0.30 and at least 0.05.

One of the objects of the invention is to decrease the sodium content of foods by substituting part of the sodium chloride content by a specific calcium chloride content without reducing food preservation, and without affecting the sensory profile: smell, flavor and mouth-feel characteristics of the food.

Calcium chloride in present invention may be used with vegetable, and fruits food preparation, as it is known as an efficient preservative salt for the treatment of horticultural crops and seeds fruits. In particular calcium chloride in present invention may be used in food comprising fruit and vegetables before the sealing step in food preparation in a container to be served fresh, frozen or canned. During this preparation the texture of the fruit and vegetables can be modified. Limited quantities of calcium chloride according present invention can be mixed in a liquid packing medium to help maintain the firmness of the fruit and vegetables without deterioration of the flavor, smell and color of the goods.

Calcium chloride in present invention may be used with salty food such as bakery food, in particular bakery food using natural yeast, as calcium chloride is osmo-tolerant with baking yeast.

Calcium chloride in present invention may be used with cheese or food comprising cheese. In particular calcium chloride is an efficient coagulant of milk proteins for cheese production, accelerating the coagulation time binding case in micelles.

Calcium chloride in present invention may be used also as a calcium supplement in fruit juices, soft drinks, and sweets. Indeed the calcium chloride part-substitution of sodium chloride of the present invention provides bioavailable calcium, thanks to its high solubility and its low impact on the other characteristics of calcium enriched products.

Calcium chloride in present invention may be used also as an efficient additive in beer production. Calcium chloride protects enzyme activity against temperature. It stimulates proteases and amylases during fermentation process. It transforms the secondary alkaline phosphate into free hydrogen which gives a "more rounded" taste to beer. It also can participate actively to the burtonisation process in the mashing step of beer production.

In present invention the food product comprises generally at least 0.010%, preferably at least 0.050%, more preferably at least 0.10%, most preferred more than 0.30% by weight of sodium chloride and calcium chloride, expressed as total concentration of both sodium chloride and calcium chloride.

A too important ratio of calcium chloride to sodium chloride brings a 'metallic taste' to the food. Therefore the weight ratio of calcium chloride to sodium chloride is at most 0.28, preferably at most 0.27, more preferably at most 0.26.

The calcium chloride can be used as calcium chloride flakes: such as calcium chloride dihydrate CaCl₂.2H₂O flakes (comprising in general more than 75% by weight of CaCl₂), or such as anhydrous calcium chloride flakes (comprising in general more than 95% CaCl₂). The calcium chloride can be used also as a watery solution (comprising generally at least 35% by weight of calcium chloride. Feed grade and food grade are preferred. Food chemical codex solution is most preferred.

Other particular embodiments of present invention are described by Claims 3 to 15, alone or in combination of listed above uses. Still other particular embodiments of present invention are described by Claims 16 to 17.

Should the disclosure of any patents, patent applications, and publications which are incorporated herein by reference conflict with the description of the present application to the extent that it may render a term unclear, the present description shall take precedence.

The following examples are intended only to exemplify the invention and are not intended to limit the scope of the claimed invention.

### Example 1- Salty Cracker

Salty crackers were made on kitchen scale according to the following recipe:
▪ 56,7% flour
▪ 6,8% butter
▪ 32,8% low-fat milk
▪ 2,6% NaCl
▪ 1% water

All ingredients were mixed and molded to form a dough. This was put trough a pasta machine to keep the thickness as constant as possible.

With a square mould of 4 by 4 cm equal formed shapes were made.

Crackers were baked in a hot-air oven at 200 °C for 10 minutes and turned around after 5 minutes.

The 100% NaCl sample (reference sample) contained 2,6% Nail. The NaCl content of the four other samples was partly replaced by CaCl₂ in 4 different ratio's. The following numbers of tested crackers were given:
1. 100% NaCl/ 0% CaCl₂ (reference)
2. 90% NaCl/10% CaCl₂
3. 80% NaCl/20% CaCl₂
4. 70% NaCl/30% CaCl₂
5. 60% NaCl/40% CaCl₂

The products were individually described extensively in all relevant odour, flavour and mouth feel characteristics. After this profiling of the different products, the most significant attributes were extracted during a short group ('round table') discussion and a consensus score was given to each attribute (also after a short discussion). A panel of at least 10 professionally trained and paid graders that have been selected via an ISO 8586 procedure, tasted the different food products. A scale of 0 to 100 was taken to identify each of the following listed attributes.

The following attributes definitions were taken for the panel tests. Texture:
▪ Firm: The amount of force needed to break the sample with the teeth.
▪ Tough: The degree of force needed to pull the sample apart with the teeth.
▪ Crispy: The degree of brittle surface during breaking of the cracker. Flavor:
▪ Salty: Taste of salt (NaCl).
▪ Bitter: Tast of bitter (quinine).
▪ Mealy: Flavor associated with meal/flour.
▪ Buttery: Flavor associated with butter.
▪ Baked: Flavor associated with baked/roasted food.
Mouth feel:
▪ Tingling: Degree of tingling feeling.
▪ Dry/ rough: A rough/dry sensation in the mouth/ on teeth like when eating spinach, rhubarb.
   After taste:
▪ Salty: Taste of salt (NaCl) after swallowing the sample.
▪ Bitter: Tast of bitter (quinine) after swallowing the sample.

Regarding the 'Texture' attributes all the 4 food crackers with calcium chloride obtained the same level of attributes 'firm', 'tough', 'crispy'.

Regarding 'Flavor' attributes the 'salty' taste was slightly decreased for test cracker food 2 compared to reference, but test cracker food 3 to 5 had an increased salty flavor. Regarding 'bitter, 'mealy', 'buttery', 'baked' little difference were noted for test cracker food 2 to 4 compared to reference test cracker food 1. As the test cracker food 5 (60% NaCl/ 40% CaCl₂) differentiates itself strongly from the reference and test cracker food 2 to 4, in particular with a strong 'bitter' taste, and a decreased 'mealy' taste.

Regarding 'Mouth feel' attributes the 'tingling' taste was similar for test cracker food 2 compared to test cracker food 1 (reference), and increased sensitively for test cracker food 4 and 5. The 'dry/rough' attribute increased sharply for test cracker food 4 and 5 compared to reference cracker food 1.

Regarding 'After taste' attributes was slightly increased for test cracker food 3, 4, 5. Though 'bitter' taste increased sensitively for test cracker food 4 and 5, test cracker food 5 (60% NaCl/ 40% CaCl₂) having a flavor rating showing clearly a non linear behavior with a highly increase of bitter and dry/rough attributes.

### Example 2 - Vegetable broth

Vegetable broth (brand: Maggi) was used and diluted with 50% water to reduce the level of Na+ from 0,46% to 0,23% (respectively 1.17% and 0.58% NaCl).

The sodium (Na+) level of the reference sample was corrected to the original level with NaCl. The other samples were also corrected, but in different NaCl/CaCl₂ ratio's.

In total 5 samples were sensory evaluated:
1. 100% NaCl (reference)
2. 90% NaCl + 10% CaCl₂
3. 80% NaCl + 20% CaCl₂
4. 70% NaCl + 30% CaCl₂
5. 60% NaCl + 40% CaCl₂

Because the '0% NaCl' sample still contained 0,23% Na+ (half of the initial sodium of the Maggi tablet), the actual level of the 90% NaCl sample is 0,95% NaCl (and 0,05% CaCl₂).

### Sensory profiling:

The products were individually described extensively in all relevant odour, flavour and mouth feel characteristics. After this profiling of the different products, the most significant attributes were extracted during a short group ('round table') discussion and a consensus score was given to each attribute (also after a short discussion). A panel of at least 10 professionally trained and paid graders that have been selected via an ISO 8586 procedure, tasted the different food products. A scale of 0 to 100 was taken to identify each of the following listed attributes for each broth sample.

### Attributes Definitions

### Flavor

▪ Overall intensity: Overall flavor intensity.
▪ Salty: Taste of salt (NaCl).
▪ Sweet: Taste of sugar (sucrose).
▪ Bitter: Taste of bitter (quinine).
▪ Umami: Taste of umami (MSG; monosodium-glutamate).
▪ Vegebale/herbs: Flavor of vegetables like leek, onion, carrots and herbs like parsley, celery and pepper.
▪ Rubbery/ gassy: Flavor associated with rubber/ gassy. Mouth feel
▪ Rough/ dry: A rough/dry sensation in the mouth/ on teeth like when eating spinach, rhubarb.
   After taste
▪ Sweet: Taste of sugar (sucrose) after swallowing.
▪ Metallic: Taste associated with blood/metal after swallowing.

Samples 2-5 do all taste salty, but different salty than normal with NaCl. Panel members named it 'flat salty' and 'sweet salty'.

Sample 5 tasted different in bitterness. Panel members named it 'astringent' bitter.

Sample 4 & 5, in particular sample 5 tasted 'out of balance' compared to the reference sample.

## Claims

1. Food product comprising at least 0.005% by weight of sodium chloride and calcium chloride, expressed as total concentration of both sodium chloride and calcium chloride, **characterized in that** weight ratio of calcium chloride to sodium chloride is at most 0.30 and at least 0.05.

2. The food product of Claim 1, comprising at least 0.010%, preferably at least 0.050%, more preferably at least 0.10%, most preferred at least 0.30% by weight of sodium chloride and calcium chloride, expressed as total concentration of both sodium chloride and calcium chloride.

3. The food product of Claim 1 or 2, wherein the weight ratio of calcium chloride to sodium chloride is at most 0.28, preferably at most 0.27, more preferably at most 0.26.

4. The food product of anyone of Claims 1 to 3, wherein the weight ratio of calcium chloride to sodium chloride is at least 0.10, preferably at least 0.15, more preferably at least 0.20, most preferred at least 0.23.

5. The food product of anyone of Claims 1 to 4, comprising potassium chloride wherein weight ratio of potassium chloride to sodium chloride is at most 0.20, preferably at most 0.15, more preferably at most 0.10, most preferred at most 0.05.

6. The food product of anyone of Claims 1 to 5, comprising magnesium chloride wherein weight ratio of magnesium chloride to sodium chloride is at most 0.20, preferably at most 0.15, more preferably at most 0.10, most preferred at most 0.05.

7. The food product of anyone of Claims 1 to 6, different from sausages and/or different from charcuterie.

8. The food product of anyone of Claims 1 to 7, different from cheese.

9. The food product of anyone of Claims 1 to 8, comprising at least 40%, preferably at least 45%, more preferably at least 55% by weight of flour.

10. The food product of anyone of Claims 1 to 9, comprising at least 4%, preferably at least 5%, more preferably at least 6% by weight of butter.

11. The food product of Claims 1 to 10, comprising or consisting of salty crackers.

12. The food product of anyone of Claims 1 to 8, comprising at least 20% by weight of soluble salts selected from the list of sodium chloride, potassium chloride, calcium chloride, magnesium chloride, and mixtures thereof.

13. The food product of Claim 12 comprising or consisting of concentrate broth or concentrate broth tablet, in particular a concentrate vegetable broth or a concentrate vegetable broth tablet or in particular a concentrate meat or fish broth, or a concentrate meat or fish broth tablet.

14. Use of calcium chloride in food products according Claims 1 to 13.

15. Use of calcium chloride in food products according Claim 14 for low sodium intake.
